(19) Europäisches Patentamt
European Patent Office
Office européen des brevets

(11) **EP 0 564 140 B1**

(12) **EUROPEAN PATENT SPECIFICATION**

(45) Date of publication and mention
of the grant of the patent:
**03.01.1996 Bulletin 1996/01**

(51) Int Cl.⁶: **G01C 21/20**

(21) Application number: 93302166.9

(22) Date of filing: **22.03.1993**

(54) **Vehicle location detecting apparatus**

Fahrzeugortungsgerät

Dispositif de localisation de véhicule

(84) Designated Contracting States:
**DE FR GB IT**

(30) Priority: **03.04.1992 JP 82321/92**

(43) Date of publication of application:
**06.10.1993 Bulletin 1993/40**

(73) Proprietor:
**SUMITOMO ELECTRIC INDUSTRIES, LIMITED
Osaka 541 (JP)**

(72) Inventors:
• **Nagao, Masanobu,
c/o Osaka Works of Sumitomo
Konohana-ku, Osaka (JP)**
• **Hirano, Kazuo, c/o Osaka Works of Sumitomo
Konohana-ku, Osaka (JP)**

(74) Representative: **Murgitroyd, Ian G. et al
Glasgow G5 8QA (GB)**

(56) References cited:
EP-A- 0 166 547          EP-A- 0 380 673
EP-A- 0 514 887

• **PATENT ABSTRACTS OF JAPAN vol. 16, no.
536 (P-1449) 6 November 1992 & JP-A-42 04 013**
• **PATENT ABSTRACTS OF JAPAN vol. 14, no. 98
(P-1011) 22 February 1990 & JP-A-13 04 311**

## Description

### FIELD OF THE INVENTION

The present invention relates to a vehicle location detecting apparatus, and more particularly to such an apparatus which can detect the intersections or curves of roads that are ahead of a vehicle, and which can detect the location of the vehicle based on a road matching method.

### DESCRIPTION OF THE PRIOR ART

As a method of providing information about the actual location of a vehicle traveling streets, there has been proposed "dead reckoning" in which a distance sensor, a heading sensor, and a processing unit for processing the distance and heading data obtained from the distance and heading sensors are employed and the current location data of the vehicle are obtained based on the amount of distance change $\delta L$ occurring as the vehicle travels and the heading $\theta$ of the vehicle. In dead reckoning, the east-west directional component $\delta x$ ($= \delta L \times \cos \theta$) and south-north directional component $\delta y$ ($= \delta L \times \sin \theta$) of the distance change amount $\delta L$ are calculated, and the current location data (Px, Py) are obtained by adding the calculated components $\delta x$ and $\delta y$ to the previous location data (Px', Py'). However, since errors inevitably inherent in the distance and heading sensors are accumulated as the vehicle travels, there is the drawback that errors contained in the current location data are to be accumulated.

In order to overcome the drawback described above, map matching methods have been proposed. In the map matching methods, the location data of a vehicle obtained based on the aforementioned dead reckoning are compared every constant distance or constant time with the road map data prestored in the memory unit. The estimated locations of the vehicle are registered to respectively correspond with the roads located within a range of error that is obtained by dead reckoning. The range of error is referred to as a range of error that the current vehicle location data (Px, Py) has because of a limit error (including a distance error, a heading error and a map error) that the previous location data (Px', Py') have and of an increase in the limit error that occurs as the vehicle travels the distance $\delta L$. The estimated locations thus registered are updated according to the movement of the vehicle. A coefficient of the existence of the vehicle (correlation coefficient) of each estimated location with respect to the corresponding road is calculated every predetermined time or predetermined distance. By using the correlation coefficient that is smallest among the correlation coefficients less than a predetermined threshold value, a correction of the accumulated errors with respect to the vehicle location data is made, and then the current location of the vehicle is matched to a location on road (Japanese patent laid-open publication Nos. 63-148115, 63-115004, and 64-53112). The vehicle location thus determined with a map matching method can be outputted as a current location and displayed together with road map.

However, in a case where the aforementioned map matching method is used, the following drawback arises because each of the links of the road map data stored in the memory is made along the longitudinal center line of a corresponding road. That is, if, when a vehicle turns the intersection or curve of a road, the vehicle turns around the corner of the road and not along the road center line, the actual travel track of the vehicle will not coincide with the track of the link substantially corresponding to the road center line. In such a case, if the current location of the vehicle is corrected with a map matching method, then errors will occur in the current location of the vehicle.

It is, accordingly, an important object of the present invention to provide a vehicle location detecting apparatus which is capable of detecting the location of a vehicle more accurately by automatically recognizing the shapes of the intersections or curves of roads that are ahead of the current location of the vehicle detected by a road matching method, and by making a correction according to the recognized shapes of the intersections or curves of roads.

### SUMMARY OF THE INVENTION

In accordance with an important aspect of the present invention, there is provided a vehicle location detecting apparatus comprising a road map memory having road map data stored therein, heading sensing means for sensing a heading of a vehicle, distance sensing means for sensing distances traveled by said vehicle, and location detecting means for integrating said distances and heading obtained every predetermined timing and for calculating an estimated location of said vehicle on the basis of the integrated distances and heading and for detecting a current location of said vehicle on a road on the basis of a degree of similarity between said estimated location and said road map data stored in said road map memory.

The vehicle location detecting apparatus further comprises detection means for detecting that said vehicle made a turn to the right or the left, readout means for reading road width data of a road that was passed by said vehicle when said vehicle made a turn to the right or the left, out of said road map memory, and correction means for correcting said current location of said vehicle based on said road width data read out by said readout means.

If a vehicle make a turn to the right or the left, the actual distance traveled by the vehicle is shorter than the track of the center line of the road that the vehicle passed. Therefore, the current location detected on a road by the use of the road map pattern has to be corrected. The current location of the vehicle detected with the road map pattern can be corrected accurately with a correction value determined based on the width of the road passed by the vehicle.

The aforementioned correction means may correct said current location of said vehicle with a value corresponding to said road width data and a turn angle of said road that was passed by said vehicle when said vehicle made a turn to the right or the left. In such a case, the correction value is determined by the road width and the turn angle of the road passed by the vehicle. Accordingly, the location of the vehicle detected with the road map pattern can be corrected more accurately.

The aforementioned road map memory may have stored therein data of "keep to the right" rule and data of "keep to the left" rule, and if said data of "keep to the right" rule is adopted, said current location of said vehicle is corrected when said vehicle made a turn to the right, and if said data of "keep to the left" rule is adopted, said current location of said vehicle is corrected when said vehicle made a turn to the left. In the case of the "keep to the right" rule, an error will occur in the current location of the vehicle detected with the road map pattern, because, when the vehicle makes a turn to the right, the vehicle turns around the corner of the road and not along the center line of the road. In the case of the "keep to the left" rule, an error will occur in the current location of the vehicle detected with the road map pattern, because , when the vehicle makes a turn to the left, the vehicle turns around the corner of the road and not along the center line of the road. Accordingly, in both cases of the "keep to the right" rule and the "keep to the left" rule, the current location of the vehicle can be corrected.

## BRIEF DESCRIPTION OF THE DRAWINGS

The above and other objects and advantages will become apparent from the following detailed description when read in conjunction with the accompanying drawings wherein:

FIG. 1 is a plan view showing the shape of an actual intersection and the four links connected to an intersection node representing the intersection;

FIG. 2 is a block diagram showing an embodiment of a vehicle location detecting apparatus according to the present invention;

FIG. 3 is a flow chart showing how an error in the location of a vehicle is corrected in accordance with the vehicle location detecting apparatus of the present invention;

FIG. 4 is a flow chart showing how an error in the location of a vehicle is corrected when the vehicle travels the left side or right side of a road; and

FIG. 5 illustrates an intersection wherein the heading of an approach link connected to an intersection node representing the intersection is θ1 and the heading of a leaving link leaving to the left of the intersection node is θ2.

## DESCRIPTION OF THE PREFERRED EMBODIMENTS

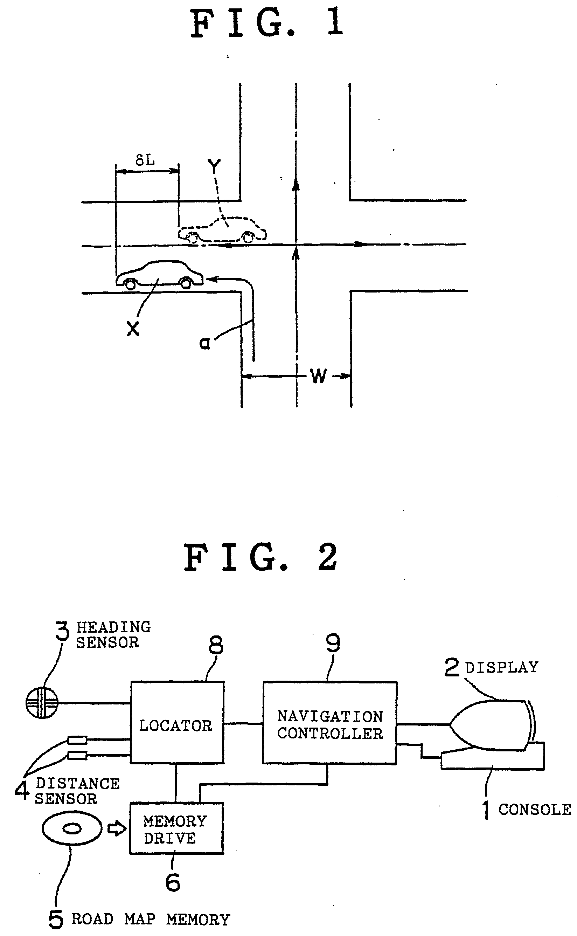

Fig. 2 is a block diagram showing one embodiment of a vehicle location detecting apparatus according to the present invention.

The vehicle location detecting apparatus, as shown in Fig. 2, comprises a console 1, a display 2 mounted on the console 1, a heading sensor 3, a distance sensor 4, a road map memory 5 having road map data stored therein, a memory drive 6 for reading the stored road map data out of the road map memory 5, a locator 8 to which the heading sensor 3, the distance sensor 4 and the memory drive 6 are connected, a navigation controller 9 to which the locator 8 and the memory drive 6 are connected, and a speech output unit 10 connected to the navigation controller 9. The navigation controller 9 reads out a road map of a predetermined area, generates display data for guiding a vehicle, and controls the display 2, the locator 8 and the speech output unit 10.

The aforementioned console 1 has a keyboard (not shown) which allows a vehicle operator to start and stop this apparatus, to move a cursor on the picture screen of the display 2, and to scroll the road map displayed on the picture screen.

The display 2 has a touch panel attached on the picture screen, the touch panel comprising a CRT (Cathode Ray Tube) or a crystalline panel. The display 2 displays the location of a vehicle detected by the locator 8 on the picture screen, together with the surrounding road map.

The heading sensor 3 is one which senses a change in the heading of a vehicle as it moves over streets. The heading sensor 3, for example, comprises a magnetic sensor, a gyro or the like.

The distance sensor 4 is used to senses distances travelled by a vehicle. The distance sensor 4, for example, comprises a vehicle speed sensor which senses the speed of the vehicle, or one or more wheel sensors which sense the rotation of the wheels of the vehicle.

The road map memory 5 is constituted by a mass storage medium memory such as a CD-ROM, an IC memory card and a magnetic tape. The road map memory 5 divides a road map (containing freeways, arteries, streets, etc.) into blocks and stores therein combination data of nodes and links at the unit of the block. The road map memory 5 also stores therein background data such as railways, rivers and famous facilities. The node is referred to as a coordinate position for specifying the intersection or curve of a road. In some cases, a node representing an intersection is called an intersection node and a node representing the curve of a road other than an intersection is called an interpolation point node. Data of a node contain a node number, addresses of nodes of surrounding blocks corresponding to that node, and addresses of links connected to that node. Links are interconnected by intersection nodes. Data of a link contain a link number, addresses of start point and end point nodes, a link distance, a link heading, road classification (freeways, arteries, streets, etc.), road width, and traffic restrictions such as one-way street, turn restriction, "keep to the left", and "keep to the right".

The locator 8 calculates the track data of a vehicle by integrating the distance data sensed by the distance sensor 4 and the heading change data sensed by the heading sensor 3, and detects the location of a vehicle that is on a road having a higher probability of existence of a vehicle, on the basis of comparison of the track data with road patterns stored in the road map memory 5.

The aforementioned navigation controller 9 comprises a graphic processor and an image processing memory. It is noted that the vehicle location detecting apparatus, in addition to the components described above, may further comprise a location correcting unit which corrects the current location of a vehicle based on the information identifying the location of a passing vehicle that is transmitted from radio transmitters (e.g., beacons) located on streets. Also, the vehicle location detecting apparatus may further comprise a location correcting unit which receives information on the location of a vehicle from a GPS (Global Positioning System) and corrects the current location of the vehicle based on the received information.

The operation of the vehicle location detecting apparatus described above will hereinafter be described.

The locator 8 receives the heading data from the heading sensor 3 and the distance data from the distance sensor 4, obtains an optimum estimated heading through calibration or filtering, and calculates an estimated location from the optimum estimated heading and the distance data. Then, a vehicle-existence probability area having the estimated location at the center thereof is obtained. The vehicle-existence probability area is determined depending upon the errors in the heading data or the distance data, and is generally a circular shape having the estimated location of the vehicle at the center thereof. In addition, a degree of pattern similarity between the track of the estimated location and the road network data in the vehicle-existence probability area that are obtained from the road map memory 5 is repeatedly calculated, and then the location of the vehicle on the link contained in the vehicle-existence probability area is calculated. Finally, the aforementioned estimated location is corrected with the location of the vehicle thus calculated.

Assume now that the vehicle approached an intersection node. Fig. 1 illustrates the shape of an actual intersection and the four links connected to an intersection node representing the actual intersection. When the vehicle made a turn to the-left of this intersection along the track $\underline{a}$ of Fig. 1, the actual distance traveled by the vehicle is shorter than the distance between the two links connected to the intersection node. Therefore, even if the vehicle reached the X point of Fig. 1, the location of the vehicle attained by a map matching method is the Y point shown in Fig. 1. For this reason, an error occurs in the location of the vehicle and continues until it is corrected at the next intersection or curve of a road. If the error is large, it cannot be corrected even at the next intersection or curve of a road and therefore there is a possibility of selecting an incorrect track of the vehicle.

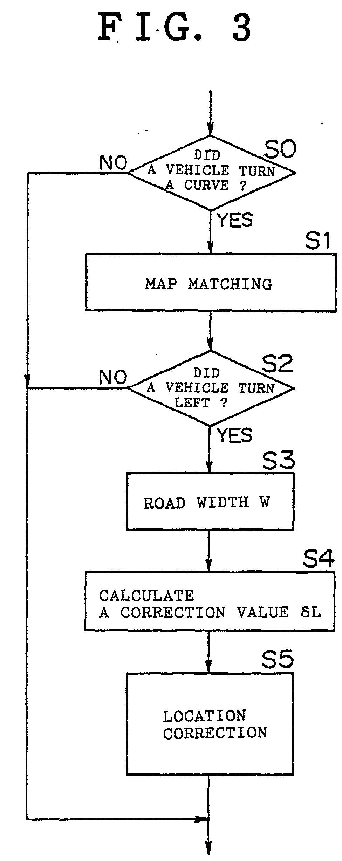

In order to overcome the above problem, the navigation controller 9 performs a control such as the flow chart shown in Fig. 3. The location data and heading data of the vehicle are obtained every constant travel distance (e.g., 20 m) or constant travel time (e.g., 1 sec.) from the locator 8. Based on the location data and heading data of the vehicle, it is determined in step S0 if the vehicle turned a curve. If yes, the step S0 advances to step S1, in which the location of the vehicle is corrected by a normal map matching process. The step S1 then advances to step S2, in which it is determined if the vehicle made a turn to the left. When a vehicle makes a turn to the right, no correction is required because the track of the vehicle is substantially the same as the center line of the road. If it is determined, from a heading change between the headings of the vehicle at the beginning of the curve and at the end of the curve, that the vehicle made a turn to the left, the step S2 advances to step S3. In the step S3, the width W (FIG. 1) of a road immediately before the vehicle makes a turn to the left is read out. The step S3 then advances to step S4 in which a value $\delta L$ for correcting the location of the vehicle is calculated by the following equation:

$$\delta L = W/2$$

The step S4 then advances to step S5, in which an accurate location of the vehicle is attained by adding the correction value $\delta L$ to the location of the vehicle obtained by the aforementioned map matching method.

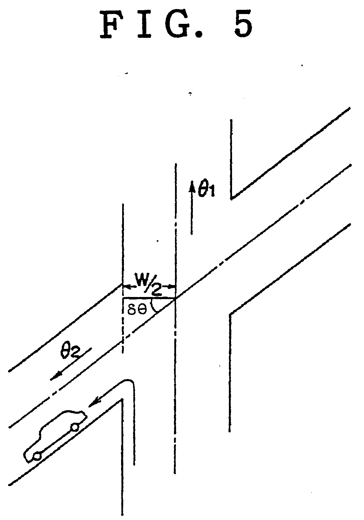

The present invention is not limited to the aforementioned embodiment. Although in the embodiment a vehicle made a turn to the left at an angle of about 90°, it is noted that the present invention may also be applicable even if a vehicle make a turn to the left at an angle that is not 90°. Fig. 5 illustrates an intersection wherein the heading of an approach link connected to an intersection node representing the intersection is $\theta1$ and the heading of a leaving link leaving to the left of the intersection node is $\theta2$. In such a case, the aforementioned value $\delta L$ for correcting the location of the vehicle is given by the following equation:

$$\delta L = W/2\sin(\theta2 - \theta1) = W/2\sin\delta\theta$$

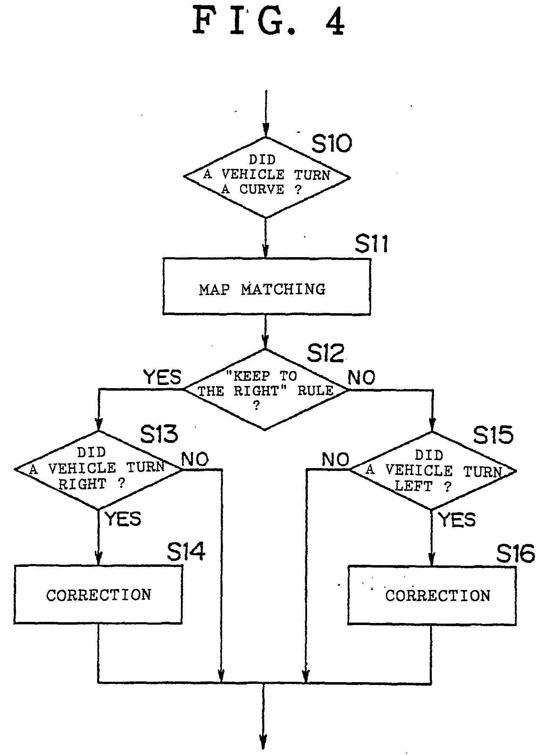

While in the embodiment of the present invention a vehicle travels on the left, it is noted that the present invention is also applicable even when a vehicle travels on the right. In such a case, an error in the location of the vehicle is corrected according to the steps shown in Fig. 4. Based on the location data and heading data of the vehicle from the locator 8, it is determined in step S10 if the vehicle turned a curve. If yes, the step S10 advances to step S11, in which the location of the vehicle is corrected by a normal map matching process. The step S11 then advances to step S12, in which it is determined, from the road map data, if the "keep to the right" rule or "keep to the left" rule is adopted. If the "keep to the right" rule, the step S12 advances to step S13, in which it is determined if the vehicle made a turn to the right. If yes, the step S13 advances to step S14. In the step S14, the steps S3 through S5 of Fig. 3 are processed. If the "keep to the left" rule, the step S12 advances to step S15, in which it is determined if the vehicle made a turn to the left. If yes, the step S15 advances to step S16. In the step S16, the steps S3 through S5 of Fig. 3 are processed. Therefore, in both cases of the "keep to the right" rule and the "keep to the left" rule, the vehicle location detecting apparatus of the present invention can work with the aforementioned control. As a result, it is not necessary to modify the vehicle location apparatus, depending on countries to which it is exported.

While the subjection invention has been described with relation to the preferred embodiment, various modifications and adaptations thereof will now be apparent to those skilled in the art. All such modifications and adaptations as fall within the scope of the appended claims are intended to be covered thereby.

## Claims

1. A vehicle location detecting apparatus comprising:

   a road map memory (5) having road map data stored therein;
   heading sensing means (3) for sensing a heading of a vehicle;
   distance sensing means (4) for sensing distances travelled by said vehicle;
   location detecting means (8) for integrating said distances and heading obtained every predetermined timing and for calculating an estimated location of said vehicle on the basis of the integrated distances and heading and for detecting a current location of said vehicle on a road on the basis of a degree of similarity between said estimated location and said road map data stored in said road map memory (5); characterised in that the apparatus further comprises detection means for detecting that said vehicle made a turn to the right or the left;
   readout means for reading road width data of a road that was passed by said vehicle when said vehicle made a turn to the right or the left, out of said road map memory (5); and
   correction means for correcting said current location of said vehicle based on said road width data read out by said readout means.

2. A vehicle location detecting apparatus as set forth in claim 1, wherein said correction means corrects said current location of said vehicle with a value corresponding to said road width data and a turn angle ($\delta\theta$) of said road that was passed by said vehicle when said vehicle made a turn to the right or the left.

3. A vehicle location detecting apparatus as set forth in claim 1, wherein said road map memory (5) has stored therein data of "keep to the right" rule and data of "keep to the left" rule, and if said data of "keep to the right" rule is adopted, said current location of said vehicle is corrected when said vehicle made a turn to the right, and if said data of "keep to the left" rule is adopted, said current location of said vehicle is corrected when said vehicle made a turn to the left.

## Patentansprüche

1. Vorrichtung zur Erfassung des Standortes eines Fahrzeuges, bestehend aus:

   einem Straßenkartenspeicher (5) mit darin gespeicherten Straßenkartendaten;

   einer Kurs-Erfassungseinrichtung (3) zur Erfassung eines Kurses eines Fahrzeuges;

   einer Entfernung-Erfassungseinrichtung (4) zur Erfassung der durch dieses Fahrzeug zurückgelegten Entfernungen;

   einer Standort-Erfassungseinrichtung (8) zur Integrierung der Entfernungen und des Kurses, die zu jedem vorbestimmten Zeitpunkt erhalten wurden, und zum Berechnen eines geschätzten Standortes des Fahrzeuges auf der Grundlage der integrierten Entfernungen und des Kurses und zur Bestimmung eines gegenwärtigen Standortes des Fahrzeuges auf einer Straße auf der Grundlage eines Grades der Ähnlichkeit zwischen dem geschätzten Standort und den in dem Straßenkartenspeicher (5) gespeicherten Straßenkartendaten;

   dadurch gekennzeichnet, daß die Vorrichtung weiterhin besteht aus

   einer Erfassungseinrichtung zum Erfassen einer erfolgten Fahrt des Fahrzeuges nach rechts oder nach links;

   einer Ausleseeinrichtung zum Lesen von Daten der Straßenbreite einer Straße aus dem Straßenkartenspeicher (5), die von dem Fahrzeug befahren wurde, als das Fahrzeug nach rechts oder nach links fuhr; und

   einer Korrektureinrichtung zur Korrektur des gegenwärtigen Standortes des Fahrzeuges auf der Grundlage dieser Daten der Straßenbreite, die von der Ausleseeinrichtung ausgelesen wurde.

**2.** Vorrichtung zur Erfassung des Standortes eines Fahrzeuges nach Anspruch 1, bei welcher die Korrektureinrichtung den gegenwärtigen Standort des Fahrzeuges mit einem Wert korrigiert, welcher den Daten der Straßenbreite entspricht, und einem Wendewinkel ($\delta\theta$) der Straße, die von dem Fahrzeug befahren wurde, als das Fahrzeug nach rechts oder nach links fuhr.

**3.** Vorrichtung zur Erfassung des Standortes eines Fahrzeuges nach Anspruch 1, bei welcher in dem straßenkartenspeicher (5) die Daten für eine Regel "bleibe auf rechts" und die Daten für eine Regel "bleibe auf links" gespeichert sind, wobei der gegenwärtige Standort des Fahrzeuges bei einer Annahme der Daten der Regel "bleibe auf rechts" korrigiert wird, wenn das Fahrzeug nach rechts gefahren wurde, und der gegenwärtige Standort des Fahrzeuges bei einer Annahme der Daten der Regel "bleibe auf links" korrigiert wird, wenn das Fahrzeug nach links gefahren wurde.

**Revendications**

**1.** Appareil de localisation de véhicule comprenant :
une mémoire de carte routière (5) ayant des données de carte routière enregistrées ;

un moyen de détection de cap (3) pour détecter le cap d'un véhicule ;
un moyen de détection de distance (4) pour détecter les distances parcourues par ledit véhicule ;
un moyen de localisation (8) pour intégrer lesdites distances et ledit cap obtenu à chaque instant prédéterminé et pour calculer une localisation estimée dudit véhicule sur la base des distances intégrées et du cap et pour détecter une localisation courante dudit véhicule sur une route sur la base d'un degré de similarité entre ladite localisation estimée et lesdites données de carte routière enregistrées dans ladite mémoire de carte routière (5) ;
caractérisé en ce que l'appareil comprend en outre :
un moyen de détection pour détecter que ledit véhicule a fait un virage vers la droite ou vers la gauche ;
un moyen de lecture pour lire les données de largeur de route d'une route qui a été passée par ledit véhicule lorsque ledit véhicule a fait un virage vers la droite ou vers la gauche, à partir de ladite mémoire de carte routière (5) ; et
un moyen de correction pour corriger ladite localisation courante dudit véhicule sur la base desdites données de largeur de route lues à partir desdits moyens de lecture.

**2.** Appareil de localisation de véhicule selon la revendication 1, dans lequel ledit moyen de correction corrige ladite localisation courante dudit véhicule avec une valeur correspondant auxdites données de largeur de route et un angle de virage ($\delta\theta$) de ladite route qui a été passée par ledit véhicule lorsque le véhicule a fait un virage vers la droite ou vers la gauche.

**3.** Appareil de localisation de véhicule selon la revendication 1, dans lequel ladite mémoire de carte routière (5) comporte l'enregistrement des données de "conduite à droite" et des données de "conduite à gauche", et si lesdites données de "conduite à droite" sont adoptées, ladite localisation courante dudit véhicule est corrigée lorsque ledit véhicule a fait un virage à droite, et si lesdites données de "conduite à gauche" sont adoptées, ladite localisation courante dudit véhicule est corrigée lorsque ledit véhicule a fait un virage à gauche.

# F I G. 1

# F I G. 2

# FIG. 3

```
            ◇ SO
         DID
    NO ◇ A VEHICLE TURN ◇
         A CURVE ?
              │ YES
              ▼
    ┌──────────────────────┐  S1
    │     MAP MATCHING      │
    └──────────────────────┘
              │
              ▼
            ◇ S2
         DID
    NO ◇ A VEHICLE TURN ◇
         LEFT ?
              │ YES
              ▼
    ┌──────────────────────┐  S3
    │     ROAD WIDTH W      │
    └──────────────────────┘
              │
              ▼
    ┌──────────────────────┐  S4
    │ CALCULATE            │
    │ A CORRECTION VALUE δL │
    └──────────────────────┘
              │
              ▼
    ┌──────────────────────┐  S5
    │      LOCATION         │
    │     CORRECTION        │
    └──────────────────────┘
              │
              ▼
```

EP 0 564 140 B1

# F I G. 4

# F I G. 5